## Europäisches Patentamt
## European Patent Office
## Office européen des brevets

(11) Veröffentlichungsnummer: **0 049 786**
**B1**

(12) **EUROPÄISCHE PATENTSCHRIFT**

(45) Veröffentlichungstag der Patentschrift:
20.03.85

(51) Int. Cl.⁴: **B 60 N 1/00**

(21) Anmeldenummer: 81107553.0

(22) Anmeldetag: 23.09.81

(54) Sitzfederungssystem.

(30) Priorität: 10.10.80 US 195861

(43) Veröffentlichungstag der Anmeldung:
21.04.82 Patentblatt 82/16

(45) Bekanntmachung des Hinweises auf die Patenterteilung:
20.03.85 Patentblatt 85/12

(84) Benannte Vertragsstaaten:
AT DE FR GB IT SE

(56) Entgegenhaltungen:
DE - A - 2 700 490
DE - A - 2 800 630
US - A - 3 265 345
US - A - 3 470 692
US - A - 3 486 417
US - A - 3 599 956
US - A - 3 632 077
US - A - 3 712 603
US - A - 3 912 248
US - A - 3 938 770

(73) Patentinhaber: DEERE & COMPANY, 1 John Deere Road, Moline Illinois 61265 (US)

(72) Erfinder: Thompson, James Edward, 2022 Lilac Lane, Cedar Falls Iowa 50613 (US)
Erfinder: Uehle, Howard Thomas, 2413 Ashland Avenue, Cedar Falls Iowa 50613 (US)

(74) Vertreter: Gramm, Werner, Prof. Dipl.-Ing. et al, Patentanwälte Gramm + Lins Theodor-Heuss-Strasse 2, D-3300 Braunschweig (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Sitzfederungssystem, bestehend aus einem mit einem Sitz in Verbindung stehenden Kolben, der in einem Zylinder geführt ist, der über eine Flüssigkeitsleitung an einen Druckspeicher angeschlossen ist, der die durch eine Abwärtsbewegung des Sitzes verdrängte Flüssigkeit aufnimmt, wobei in die genannte Leitung zwischen Zylinder und Druckspeicher eine die Dämpfung des Sitzes vergrössernde Einrichtung (Dämpfungsverstelleinrichtung) geschaltet ist, die bei einer wesentlichen Abwärtsbewegung des Sitzes die Durchflussmenge der vom Zylinder zum Druckspeicher strömenden Flüssigkeit durch Verstellung des Strömungsquerschnittes in einem Abschnitt der genannten Leitung verringert.

Eine derartige Ausführungsform lässt sich der US-PS 3 632 077 entnehmen. Hier wird die Verstellung des Strömungsquerschnittes der den Zylinder mit dem Druckspeicher verbindenden Leitung über ein mechanisches Gestänge gesteuert, und zwar in Abhängigkeit von der Wegstrecke, um die der Sitz nach unten durchgedrückt wird, wenn es sich z.B. um den Fahrersitz eines Traktors handelt, der über eine Bodenwelle fährt. Die jeweilige Grösse der Dämpfung ist somit abhängig von der jeweiligen Stellung des Sitzes.

Ganz allgemein sind seit langem Sitzfederungssysteme bekannt, die hinsichtlich der Vertikalbewegung des Sitzes eine Dämpfung aufweisen und meist auch mit einer Sitzhöhenverstelleinrichtung versehen sind. Derartige Sitzfederungssysteme werden vor allem für geländegängige Fahrzeuge wie z.B. Traktoren benötigt, um Schlaglöcher, Bodenrinnen und unebenes Gelände hinsichtlich der daraus resultierenden Erschütterungen weitgehend auszugleichen und dem Fahrer einen erhöhten Komfort zu gewährleisten.

Bei bestimmten Ausführungsformen derartiger Sitzfederungssysteme ist für den Sitz eine festeingestellte Vertikaldämpfung vorgesehen, die sich zwar vertikal verstellen lässt, nach ihrer Einstellung aber denselben Dämpfungswert beibehält, und zwar unabhängig von den jeweiligen Geländegegebenheiten. Erwartet der Fahrer ein stark unebenes Gelände, kann er eine höhere Dämpfung einstellen. Dies ist zwar bei schwerem Gelände wünschenswert, wenn nicht sogar erforderlich, führt aber gleichzeitig zu einer harten Sitzfederung mit geringem Komfort. Deshalb wird der Fahrer bei Auftauchen von ebenem Gelände die Dämpfung sofort wieder verringern, um den Sitzkomfort zu vergrössern.

Die Schwierigkeit bei einer festeingestellten Vertikaldämpfung ergibt sich aus der Tatsache, dass sich das Gelände plötzlich ändern kann, z.B. dann, wenn das Fahrzeug über eine verhältnismässig ebene Strasse oder ein ebenes Feld fährt, dabei aber plötzlich Querrinnen überfahren muss. Ist dann das Sitzfederungssystem auf eine niedrige Dämpfung eingestellt, führt das plötzliche Überfahren von Querrinnen oder Schlaglöchern zu einer starken Vertikalbewegung des Sitzes, wobei die Sitzfederung unter Umständen sogar durchschlagen kann.

Weitere Beispiele für vorbekannte Sitzfederungssysteme lassen sich den US-Patentschriften 3 265 345, 3 912 248, 3 486 417, 3 599 956, 3 712 603, 3 470 692 und 3 938 770 entnehmen. So beschreibt beispielsweise das US-Patent 3 265 345 ein System, bei dem die Aufwärtsbewegung des Sitzes einer gesteuerten Dämpfung unterliegt.

Die Erfindung geht aus von einem Sitzfederungssystem der eingangs beschriebenen Art. Dabei liegt der Erfindung die Aufgabe zugrunde, dieses System hinsichtlich seiner verhältnismässig aufwendigen Steuerung über ein mechanisches Gestänge zu vereinfachen und dabei die automatische Verstellung der Dämpfung nicht mehr in Abhängigkeit von dem nach unten gerichteten Verschiebeweg des Sitzes durchzuführen.

Diese Aufgabe wird gemäss der Erfindung dadurch gelöst, dass die Dämpfungsverstelleinrichtung eine Drossel mit einer verformbaren Blende ist, die nur anspricht, wenn der Druck an deren dem Zylinder zugewandten Seite grösser ist als derjenige, der dem Druckspeicher zugewandten Seite, und dass die Drossel bei steigender Grösse dieses Druckunterschiedes selbsttätig zunehmend schliesst.

Zusätzlich kann die Erfindung gekennzeichnet sein durch eine Nenndämpfung des Sitzes festlegende Einrichtung (Nenndämpfungseinrichtung), die die Durchflussmenge der Flüssigkeit zwischen Zylinder und Druckspeicher begrenzt auf einen einstellbaren Wert, der die Nenndämpfung des Sitzes bestimmt, wobei dann die Dämpfungsverstelleinrichtung den für die Nenndämpfung eingestellten Wert vergrössert. Diese Nenndämpfungseinrichtung ist vorzugsweise eine Einrichtung zur manuellen Verstellung des Strömungsquerschnittes in einem Abschnitt der genannten Leitung.

Eine spezielle konstruktive Lösung kann erfindungsgemäss durch folgende Merkmale gekennzeichnet sein:

a) der Kolben bewegt sich im Zylinder annähernd vertikal;

b) ein Sitzhöhenverstellventil ist in die Leitung zwischen Zylinder und Druckspeicher geschaltet;

c) ein Bedienungsorgan für die Sitzhöhenverstellung ist mit dem Sitzhöhenverstellventil verbunden;

d) ein Druckflüssigkeitsanschluss ist über ein Druckregulierventil mit dem Sitzhöhenverstellventil verbunden;

e) der manuell verstellbare, die Nenndämpfungseinrichtung bildende Durchflussregler sowie der die Dämpfungsverstelleinrichtung bildende Durchflussregler sind in die Leitung zwischen Druckspeicher und Anschluss des Sitzhöhenverstellventil in diese Leitung geschaltet.

Das erfindungsgemässe Sitzfederungssystem benötigt somit für die automatische Steuerung der Dämpfungsverstelleinrichtung keinerlei mechanisches Gestänge, das von dem sich nach unten verschiebenden Sitz beaufschlagt wird. Vielmehr erfolgt die automatische Steuerung in Abhängigkeit von der nach unten gerichteten Sitzgeschwindigkeit bzw. der Zunahme dieser Geschwindigkeit, die in der Flüssigkeitsleitung in der Strömung vom Zylinder zum Druckspeicher zu einem Druckanstieg führt, der selbsttätig den freien Durchflussquerschnitt der Drosselöffnung eines Durchflussreglers ändert. Die Nenndämpfung kann daher manuell auf einen verhältnismässig niedrigen Wert eingestellt werden, um einen weichen Federungskomfort bei hohen Bewegungsfrequenzen in verhältnismässig ebenem Gelände zu gewährleisten. Diese manuell eingestellte Nenndämpfung wird automatisch dann erhöht, wenn sich bei stark unebenem Gelände, Schlaglöchern, Querrinnen od. dgl. niedrigere Bewegungsfrequenzen ergeben.

In der Zeichnung ist eine als Beispiel dienende Ausführungsform dargestellt. Es zeigen:

Figur 1 ein Diagramm, in dem das Bewegungsdurchlassungsvermögen als Funktion der Bewegungsfrequenz in Form von Kurven eingetragen ist, die das Verhalten von Sitzfederungssystemen mit konstanter Dämpfung darstellen;

Figur 2 eine schematische Blockdarstellung eines erfindungsgemässen Sitzfederungssystems;

Figur 3 ein Querschnitt eines speziellen Ausführungsbeispieles eines Sitzfederungssystems gemäss Figur 2;

Figur 4A einen Querschnitt durch einen durch Flüssigkeitsdruck gesteuerten Durchflussregler in der Konstruktion gemäss Figur 3 und

Figur 4B die Darstellung gemäss Figur 4A, jedoch mit einer unter Wirkung des Flüssigkeitsdrucks verkleinerten Durchflussöffnung.

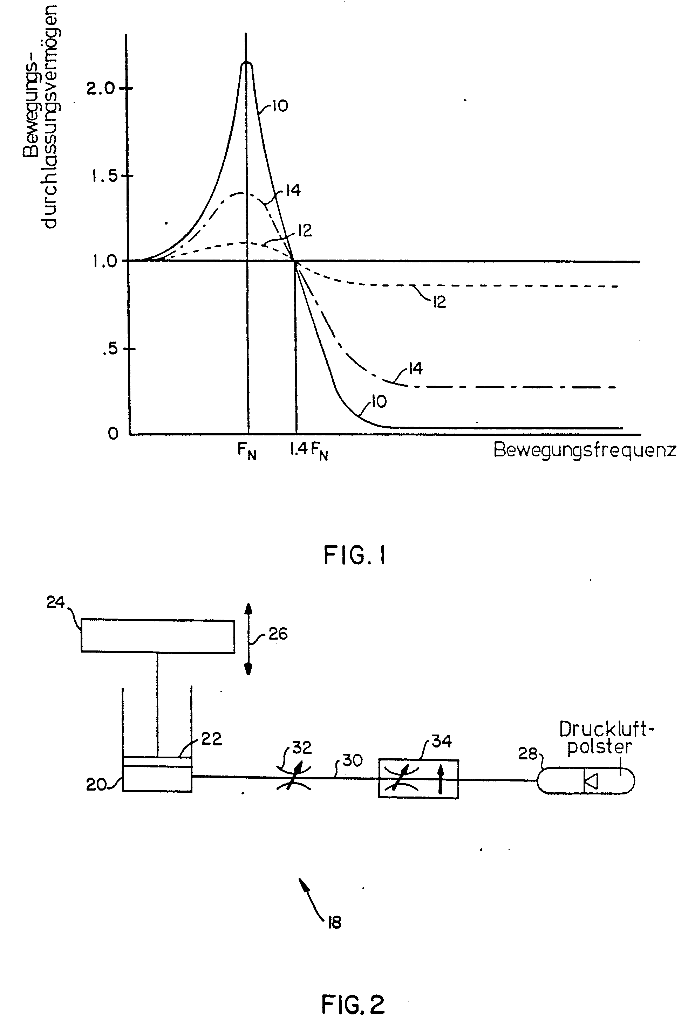

In dem Diagramm in Figur 1 ist das Bewegungsdurchlassungsvermögen eines Sitzfederungssystems entlang der Vertikalachse aufgetragen, während die Bewegungsfrequenz in der Horizontalachse eingezeichnet ist. Das Durchlassungsvermögen ergibt sich als Verhältnis von Ausgangsbewegung zu Eingangsbewegung; es steigt nach oben von dem Wert 0 auf der Horizontalachse von dem Wert 1,0 bis 2,0 an. Die Frequenz der Bewegung nimmt nach rechts von 0 auf der Vertikalachse durch den Wert $F_N$, der die Eigenfrequenz des Sitzfederungssystems angibt, bis auf einen erheblich über $F_N$ liegenden Wert zu.

Wie eingangs bereits erläutert wurde, weisen die meisten Sitzfederungssysteme eine konstante Dämpfung auf, die sich z.B. aus der Verwendung eines Stossdämpfers mit festgelegter Drosselbohrung ergibt. Die ausgezogene Kurve 10 in Figur 1 zeigt den charakteristischen Bewegungsablauf für ein derartiges, auf nur sehr geringe Dämpfung eingestelltes oder überhaupt keine Dämpfung aufweisendes Sitzfederungssystem. Es ist erkennbar, dass sich die Kurve bei höheren Bewegungsfrequenzen, wie sie sich beim Überfahren eines verhältnismässig ebenen Terrains ergeben, hinsichtlich des Bewegungsdurchlassungsvermögens dem Idealwert 0 annähert. Bei Frequenzen jedoch, die in der Nähe der Eigenfrequenz des Sitzfederungssystems liegen, und die z.B. beim Überfahren grosser Schlaglöcher oder einer grossen Anzahl derartiger Schlaglöcher auftreten, verschlechtert sich die Kurve 10 sehr schnell zu einem Punkt, wo das Durchlassungsvermögen den Wert 2,0 oder sogar einen höheren Wert annimmt. Bei diesen verhältnismässig unkontrollierten Fahrbedingungen ergeben sich als Folge einer unzureichenden Dämpfung sehr hohe Sitzausschläge.

In einem anderen Extremfall kann das Sitzfederungssystem auf eine sehr hohe Dämpfung eingestellt sein, für die sich ein Durchlassungsvermögen gemäss der gestrichelten Kurve 12 ergibt. Bei oder in der Nähe der Eigenfrequenz $F_N$ liegt das Durchlassungsvermögen relativ dicht bei dem akzeptablen Wert 1,0. Bei höheren, über die Eigenfrequenz $F_N$ hinausgehenden Frequenzen ist jedoch das Durchlassungsvermögen nur geringfügig besser als 1,0 und liegt somit weit entfernt von dem Idealwert 0.

Da Sitzfederungssysteme mit konstanter Dämpfung in dem einen Endbereich des Frequenzspektrums zu komfortablen, kontrollierten Fahrbedingungen führen, was allerdings für das andere Ende des Frequenzspektrums nicht der Fall ist, wird üblicherweise ein Kompromiss gesucht, wie er durch die strichpunktierte Kurve 14 in Figur 1 dargestellt ist. Hier liegt das Durchlassungsvermögen bei der Eigenfrequenz $F_N$ ungefähr bei 1,4 und ist somit nicht so gut wie bei der durch die Kurve 12 dargestellten hohen Dämpfung, liegt aber erheblich besser als bei nur geringer oder gar keiner Dämpfung gemäss der Kurve 10. Bei höheren Frequenzen führt der Kompromiss gemäss der Kurve 14, also eine verhältnismässig geringe Dämpfung, zu einem Durchlassungsvermögen, das nicht so dicht bei 0 liegt wie im Fall der Kurve 10, jedoch erheblich besser liegt als der von der Kurve 12 für hohe Dämpfung erreichte Wert 1,0.

Figur 1 macht somit deutlich, dass bei den dargestellten Sitzfederungssystemen mit konstanter Dämpfung das Bewegungsdurchlassungsvermögen bei einer Frequenz von etwa 1,4 $F_N$ einen Wert von 1,0 aufweist, und zwar unabhängig von der jeweils eingestellten Dämpfung.

Es ist erkennbar, dass bessere Verhältnisse dann erreicht werden, wenn das Sitzfederungssystem im Bereich der Eigenfrequenz eine verhältnismässig hohe, bei höheren Frequenzen hingegen eine relativ niedrige Dämpfung aufweist. Dies wird durch die erfindungsgemässe Lösung erreicht, bei der das Sitzfederungssystem eine einstellbare Eigen- bzw. Nennfrequenz aufweist, die in Abhängigkeit der nach unten gerichteten Verschiebegeschwindigkeit des Sitzes oder aber in Abhängigkeit von der Änderung dieser Geschwindigkeit erhöht wird. Dies gibt die Möglichkeit, das Sitzfederungssystem so einzustellen, dass seine Nenndämpfung niedrig genug liegt, um komfortable Fahrbedingungen zu gewährleisten, wenn das Fahrzeug über verhältnismässig ebenes Gelände fährt, um aber zur gleichen Zeit die Dämpfung schnell und effektiv anheben zu können, wenn plötzlich grosse Schlaglöcher oder andere Terrainunebenheiten auftauchen, die dicht bei der Nennfrequenz des Federungssystems liegen und sonst unkontrollierbare, insbesondere nach unten gerichtete Sitzverschiebungen hervorgerufen würden.

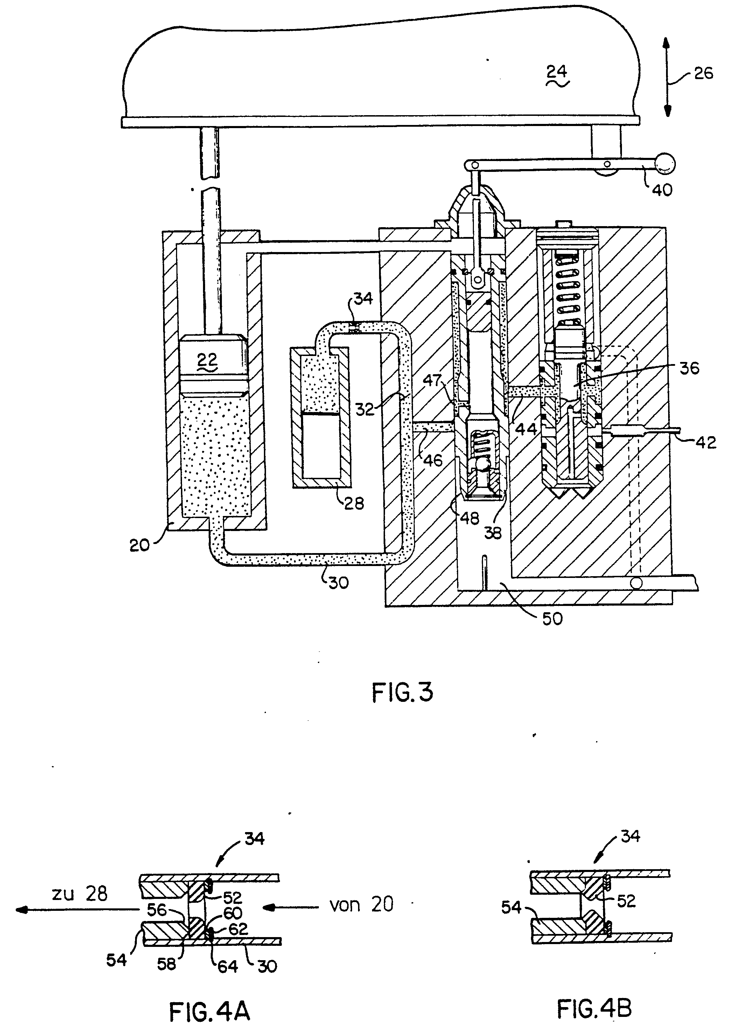

In Figur 2 ist ein erfindungsgemässes Sitzfederungssystem 18 schematisch dargestellt. Es umfasst einen Zylinder 20, in dem ein Kolben 22 angenähert vertikal verschiebbar angeordnet ist, der so mit einem Sitz 24 verbunden ist, dass dieser gemäss dem Doppelpfeil 26 zusammen mit dem Kolben 22 eine angenähert vertikal verlaufende Bewegung durchführen kann.

Der Zylinder 20 ist über eine Leitung 30 an einen Druckspeicher 28 angeschlossen, der eine dem Anschluss der Leitung 30 gegenüberliegende Kammer aufweist, die mit Druckluft gefüllt ist. Der übrige Teil des Druckspeichers ist ebenso wie der Zylinder 20 unterhalb seines Kolbens 22 sowie die Leitung 30 mit Hydraulikflüssigkeit gefüllt. Der Druckspeicher 28 bewirkt hinsichtlich der Vertikalbewegung des Sitzes 24 eine Dämpfung. Bei Abwärtsbewegung des Sitzes 24 drückt der Kolben 22 die Flüssigkeit aus dem Zylinder 20 durch die Leitung 30 in das linke Ende des Druckspeichers 28 gegen einen federnden Widerstand, der im Ausführungsbeispiel durch ein Druckluftpolster des Druckspeichers gebildet ist. Bei einer sich anschliessenden Aufwärtsbewegung des Sitzes 24 drückt das genannte Druckluftpolster die Flüssigkeit aus dem Druckspeicher 28 zurück in den Zylinder 20.

Der Wert der durch den Druckspeicher 28 erzeugten Dämpfung ist weitgehend konstant und ist in jedem Fall unabhängig von der Bewegungsfrequenz des Sitzes 24. Um diese Nenndämpfung einstellbar zu machen, ist das Sitzfederungssystem 18 mit einer manuell verstellbaren Nenndämpfungseinrichtung 32 versehen, die zwischen Zylinder 20 und Druckspeicher 28 in die Leitung 30 eingeschaltet ist und aus einem manuell betätigbaren Durchflussregler oder einem anderen Ventiltyp bestehen kann, der manuell justiert werden kann, um die durch die Leitung 30 strömende Flüssigkeitsmenge zu variieren. Bei Verwendung eines Durchflussreglers weist dieser eine innere Drosselöffnung auf, deren Grösse durch manuelle Verstellung veränderbar ist. Weist diese Drosselöffnung ihren grössten freien Strömungsquerschnitt auf, so kann die Flüssigkeit relativ ungehindert zwischen Zylinder 20 und Druckspeicher 28 fliessen. Die Dämpfung weist dann ihren niedrigsten, durch den Druckspeicher 28 bestimmten Wert auf. Bei dieser Einstellung verhält sich das Sitzfederungssystem 18 etwa gemäss der Kurve 10 in Figur 1. In der anderen Extremstellung, in der die Drosselöffnung des die Nenndämpfungseinrichtung 32 bildenden Durchflussreglers ihren kleinsten Strömungsquerschnitt aufweist, wird der Fluss der Hydraulikflüssigkeit zwischen Zylinder 20 und Druckspeicher 28 wesentlich verringert, woraus sich eine hohe Dämpfung und ein Verhalten des Sitzfederungssystems etwa gemäss der Kurve 12 in Figur 1 ergibt.

Gemäss der Erfindung ist das in Figur 2 dargestellte Sitzfederungssystem 18 mit einer Dämpfungsverstelleinrichtung 34 versehen, die die durch die Nenndämpfungseinrichtung 32 bestimmte Nenndämpfung erhöht, und zwar in Abhängigkeit von der nach unten gerichteten Geschwindigkeit des Sitzes 24. Diese Dämpfungsverstelleinrichtung 34 ist in die Leitung 30 zwischen Zylinder 20 und Druckspeicher 28 eingeschaltet und ist ohne Einfluss auf den Flüssigkeitsstrom vom Druckspeicher 28 zum Zylinder 20. Die Dämpfungsverstelleinrichtung 34 weist eine innere Drosselöffnung auf, die ihre Durchstromöffnung verringert, und zwar direkt proportional zum Druck der Hydraulikflüssigkeit, die vom Zylinder 20 zum Druckspeicher 28 strömt. Durch die Veränderung der Drosselöffnung ergibt sich eine Veränderung der Dämpfung, und zwar in Abhängigkeit von der Geschwindigkeit des Sitzes 24, oder spezieller ausgedrückt in Abhängigkeit von der Geschwindigkeitsänderung der nach unten gerichteten Verschiebung des Sitzes 24. Je schneller der Sitz 24 sich nach unten bewegt, um so grösser ist der Druck der Hydraulikflüssigkeit, die vom Zylinder 20 zum Druckspeicher 28 fliesst, und um so kleiner ist die Drosselöffnung der Dämpfungsverstelleinrichtung 34. Dadurch wird also die Dämpfung über den Nennwert hinaus vergrössert, der über die manuell verstellbare Nenndämpfungseinrichtung 32 eingestellt wird. Das sich hieraus ergebende Bewegungsdurchlassungsvermögen für das Sitzfederungssystem 18 gleicht dem der gestrichelten Kurve 12 bei Frequenzen bei oder in der Nähe der Eigenfrequenz $F_N$ und der ausgezogenen Kurve 10 bei Frequenzen oberhalb 1,4 $F_N$.

Figur 3 zeigt ein detailliertes Beispiel für ein Sitzfederungssystem 18 gemäss Figur 2, wobei die mit den in Figur 2 dargestellten Teilen übereinstimmenden Teile die gleichen Bezugszeichen tragen. Zusätzlich zu den in Figur 2 dargestellten Komponenten umfasst die Ausführungsform gemäss Figur 3 noch ein Druckregulierventil 36, ein Sitzhöhenverstellventil 38 sowie einen Bedienungshebel 40 für die Sitzhöhenverstellung. Das Druckregulierventil 36 ist an einen Anschluss 42 für unter Druck stehende Hydraulikflüssigkeit angeschlossen und reguliert den Druck der von diesem Anschluss kommenden Flüssigkeit, um so Hydraulikflüssigkeit mit gewünschtem Druck über eine Leitung 44 dem Sitzhöhenverstellventil 38 zuführen zu können. Letzteres reagiert auf den Bedienungshebel 40 durch Veränderung durch die Leitung 44 und eine Leitung 46 zur Hauptleitung 30 strömt. Wird der Hebel 40 nach oben gezogen, um den Sitz 24 anzuheben, wird das Sitzhöhenverstellventil 38 nach unten gedrückt bis zu einem Punkt, an dem die Hydraulikflüssigkeit in der Leitung 44 über eine Anschluss 47 und durch eine Leitung 46 über die Hauptleitung 30 zum Zylinder 20 strömen kann.

Wenn sich der Sitz 24 nach oben bewegt in Folge der Aufwärtsbewegung des Kolbens 22 in Folge des Strömungsflusses in den Zylinder 20, so wird von dem Sitz 24 zugleich auch das Sitzhöhenverstellventil 38 nach oben gezogen. Wenn der Sitz 24 seine gewünschte Vertikalposition erreicht hat, ist der Anschluss 47 von der Leitung 46 abgetrennt, so dass auch die Leitung 46 von der Leitung 44 getrennt ist.

Wird der Hebel 40 nach unten gedrückt, um den Sitz 24 nach unten zu verstellen, wird das Sitzhöhenverstellventil 38 nach oben gezogen, bis eine Phase 48 am Boden des genannten Ventils die Leitung 46 erreicht und so einen Strömungsfluss zulässt von der Hauptleitung 30 durch die Leitung 46 zur Phase 48, wo die Flüssigkeit über einen Auslass 50 zu einem nicht dargestellten Vorratsbehälter zurückströmt. Wenn sich der Sitz 24 nach unten bewegt in Folge des Ablasses von Hydraulikflüssigkeit aus der Hauptleitung 30 und der daraus resultierenden Verringerung der Flüssigkeitsmenge im Zylinder 20, dann wird auch das Sitzhöhenverstellventil 38 nach unten gedrückt. Wenn der Sitz 24 seine gewünschte Vertikalposition erreicht hat, ist das Sitzhöhenverstellventil 38 so positioniert, dass es die Leitung 46 von der Phase 48 und damit auch von dem Auslass 50 abtrennt.

Mit Ausnahme der Fälle, in denen der Hebel 40 zum Anheben bzw. zum Absenken des Sitzes 24 nach oben gezogen oder nach unten gedrückt wird, verbleibt das Sitzhöhenverstellventil 38 in einer oder doch dicht bei einer Nennstellung, in der die Leitung 46 sowohl von der Leitung 44 als auch von dem Auslass 50 abgeschlossen ist. Eine grosse Verschiebung des Sitzes 24 nach unten führt zu einer entsprechenden Verschiebung des Sitzhöhenverstellventils 38 nach unten, bis der Anschluss 47 etwas Druckflüssigkeit zur Leitung 46 strömen lässt. Diese zusätzliche Flüssigkeit vereinigt sich mit dem Flüssigkeitsstrom von dem Zylinder 20 zum Druckspeicher 28 über die Ventile 32 und 34. In umgekehrter Weise führt eine grosse Aufwärtsverschiebung des Sitzes 24 zu einer entsprechenden Aufwärtsverschiebung des Sitzhöhenverstellventils 38, bis die Phase 48 eine teilweise Entleerung der Leitung 46 über den Auslass 50 zulässt.

Die manuell verstellbare Nenndämpfungseinrichtung 32 kann eine in der Leitung 30 vorgesehene Schwenkklappe oder aber jeden anderen verstellbaren Strömungsregler aufweisen, um innerhalb der Leitung 30 eine Durchflussöffnung mit justierbarer Grösse zu bilden.

Die Figuren 4A und 4B zeigen ein Beispiel für die in Abhängigkeit von der nach unten gerichteten Sitzgeschwindigkeit reagierende Dämpfungsverstelleinrichtung 34. Letztere umfasst einen Strömungsregler mit einer inneren Drosselöffnung, die ihre Grösse in Abhängigkeit von dem in einer vorgegebenen Richtung herrschenden Flüssigkeitsdruck ändert. Bei dem dargestellten Beispiel weist die Dämpfungsverstelleinrichtung 34 eine ringförmige Blende 52 auf, die an der Innenwandung der Leitung 30 sowie an einer Ringschulter 54 anliegt. Letztere weist einen abgephasten Randbereich 56 sowie einen weitgehend flach ausgebildeten äusseren Randbereich 58 auf, an dem die Blende 52 üblicherweise anliegt, und zwar gehalten durch eine Abdichtscheibe 60 und einen Sprengring 62, der in eine entsprechende Ringnut 64 in der Innenwandung der Leitung 30 eingreift.

Der die Dämpfungsverstelleinrichtung 34 bildende Strömungsregler ist weitgehend unempfindlich gegenüber dem Druck von der Flüssigkeit, die vom Druckspeicher 28 zum Zylinder 20 strömt (in Figur 4A in einer Richtung von links nach rechts). Hingegen reagiert der Strömungsregler 34 auf den Druck der Flüssigkeit, die vom Zylinder 20 zum Druckspeicher 28 fliesst (in Figur 4A von rechts nach links). Die sich bei dieser Strömungsrichtung ergebende Verformung der Blende 52 zeigt Figur 4B. Je grösser der Flüssigkeitsdruck ist, um so grösser ist auch die Verformung der Blende 52 und desto kleiner wird die mittige Öffnung der Blende 52. Figur 4A zeigt die unverformte Blende 52, deren mittige Durchströmöffnung daher ihr Maximum hat. Bei dieser Lage arbeitet das Sitzfederungssystem 18 mit der Nenndämpfung, die über die Nenndämpfungseinrichtung 32 eingestellt ist. Wenn sich die Blende 52 unter dem Flüssigkeitsdruck anfängt zu verformen, legt sie sich gegen den abgephasten Randbereich 56 an, wodurch sich in die mittlere Durchströmöffnung der Blende anfängt zu verkleinern, wie es Figur 4B zeigt. Dadurch erhält man eine die Nenndämpfung des Systems vergrössernde Dämpfung.

Diese zusätzliche Dämpfung tritt erst dann auf, wenn die Änderungsgeschwindigkeit bei der nach unten gerichteten Verschiebung des Sitzes den Schwellwert erreicht, bei dem der resultierende Flüssigkeitsdruck in der Leitung 30 zu einer Verformung der Blende 52 führt.

Aus den vorstehenden Erläuterungen entnimmt ein Durchschnittsfachmann zahlreiche Variationsmöglichkeiten, die alle durch die Erfindung erfasst sein sollen.

**Patentansprüche**

1. Sitzfederungssystem, bestehend aus einem mit einem Sitz (24) in Verbindung stehenden Kolben (22), der in einem Zylinder (20) geführt ist, der über eine Flüssigkeitsleitung (30) an einen Druckspeicher (28) angeschlossen ist, der die durch eine Abwärtsbewegung des Sitzes (24) verdrängte Flüssigkeit aufnimmt, wobei in die genannte Leitung (30) zwischen Zylinder (20) und Druckspeicher (28) eine die Dämpfung des Sitzes vergrössernde Einrichtung (Dämpfungsverstelleinrichtung 34) geschaltet ist, die bei einer wesentlichen Abwärtsbewegung des Sitzes (24) die Durchflussmenge der vom Zylinder (20) zum Druckspeicher (28) strömenden Flüssigkeit durch Verstellung des Strömungsquerschnittes in einem Abschnitt der genannten Leitung (30) verringert, dadurch gekennzeichnet, dass die Dämpfungsverstelleinrichtung (34) eine Drossel mit einer verformbaren Blende ist, die nur anspricht, wenn der Druck an deren dem Zylinder (20) zugewandten Seite grösser ist als derjenige, der dem Druckspeicher (28) zugewandten Seite, und dass die Drossel bei steigender Grösse dieses Druckunterschiedes selbsttätig zunehmend schliesst.

2. Sitzfederungssystem nach Anspruch 1, gekennzeichnet durch eine eine Nenndämpfung des Sitzes (24) festlegende Einrichtung (Nenndämpfungseinrichtung 32), die die Durchflussmenge der Flüssigkeit zwischen Zylinder (20) und Druckspeicher (28) begrenzt auf einen einstellbaren Wert, der die Nenndämpfung des Sitzes bestimmt, wobei dann die Dämpfungsverstelleinrichtung (34) den für die Nenndämpfung eingestellten Wert vergrössert.

3. Sitzfederungssystem nach Anspruch 1 oder 2, gekennzeichnet durch folgende Merkmale:

a) Der Kolben (22) bewegt sich im Zylinder (20) annähernd vertikal;

b) ein Sitzhöhenverstellventil (38) ist in die Leitung (30) zwischen Zylinder (20) und Druckspeicher (28) geschaltet;

c) ein Bedienungsorgan (40) für die Sitzhöhenverstellung ist mit dem Sitzhöhenverstellventil (38) verbunden;

d) ein Druckflüssigkeitsanschluss (42) ist über ein Druckregulierventil (36) mit dem Sitzhöhenverstellventil (38) verbunden;

e) der manuell verstellbare, die Nenndämpfungseinrichtung (32) bildende Durchflussregler sowie der die Dämpfungsverstelleinrichtung (34) bildende Durchflussregler sind in die Leitung (30) zwischen Druckspeicher (28) und Anschluss (46) des Sitzhöhenverstellventils (38) in diese Leitung (30) geschaltet.

## Claims

1. A seat suspension system, comprising a piston (22) connected with a seat (24) and movable in a cylinder (20) coupled via a fluid conduit (30) to an accumulator (28) receiving fluid displaced in response to downward movement of said seat (24) whereby means for increasing the damping of said seat (damping adjusting means 34) is coupled in said conduit (30) between cylinder (20) and accumulator (28), said means limiting – dependent on an essential downward movement of the seat (24) – the flow rate of fluid flowing from said cylinder (20) to said accumulator (28) by adjusting the fluid cross-section of a portion of said conduit (30), characterized in that said damping adjusting means (34) is a throttle with a deformable orifice only reacting when the pressure at its side facing the cylinder (20) is higher than the pressure on the side facing the accumulator (28) and that said throttle is increasingly closing automatically at an increasing value of said pressure difference.

2. A seat suspension system according to claim 1, further comprising means determining a nominal amount of damping of the seat (24) (nominal damping means 32) for limiting the flow rate of fluid between cylinder (20) and accumulator (28) to an adjustable value determining the nominal amount of damping of the seat, whereby then said damping adjusting means (34) increases the amount adjusted for the nominal damping.

3. A seat suspension system of claim 1 or 2, characterized by the following features:

a) The piston (22) moves approximately vertical in said cylinder (20);

b) a seat height adjustment valve (38) is coupled in said conduit (30) between cylinder (20) and accumulator (28);

c) a control member (40) for adjusting the height of the seat is coupled to said seat height adjustment valve (38);

d) a source (42) of pressurized fluid is coupled to the seat height adjustment valve (38) via a pressure regulating valve (36);

e) the manually adjustable flow control valve forming said nominal damping means (32) as well as the flow control valve forming said damping adjusting means (34) are coupled in the conduit (30) between accumulator (28) and connection (46) of said seat height adjustment valve (38) to said conduit (30).

## Revendications

1. Système de suspension élastique pour siège, constitué par un piston (22) relié à un siège (18) et guidé d'un cylindre (20) qui est raccordé par un conduit de liquide (30) à un accumulateur de pression (28), lequel reçoit le liquide refoulé par un déplacement vers le bas du siège (24), un dispositif augmentant l'amortissement du siège (dispositif de réglage d'amortissement 34) étant monté dans le conduit précité (30) entre le cylindre (20) et l'accumulateur de pression (28), ce dispositif réduisant, lors d'un déplacement notable du siège (24) vers le bas, le débit du liquide s'écoulant du cylindre (20) vers l'accumulateur de pression (28) par réglage de la section d'écoulement dans un tronçon du conduit précité (30), caractérisé en ce que le dispositif de réglage d'amortissement (34) est constitué par un dispositif d'étranglement comportant un diaphragme déformable qui ne réagit que lorsque la pression sur son côté orienté vers le cylindre (20) est supérieure à la pression sur le côté orienté vers l'accumulateur de pression (28), et en ce que le dispositif d'étranglement provoque une obturation croissant automatiquement quand la valeur de cette différence de pressions augmente.

2. Système de suspension élastique pour siège suivant la revendication 1, caractérisé par un dispositif définissant un amortissement nominal du siège (24) (dispositif d'amortissement nominal 32), qui limite le débit de passage du liquide entre le cylindre (20) et l'accumulateur de pression (28) à une valeur réglable déterminant l'amortissement nominal du siège, le dispositif de réglage d'amortissement (34) augmentant ensuite la valeur réglée pour l'amortissement nominal.

3. Système de suspension élastique pour siège suivant la revendication 1 ou 2, caractérisé par les particularités suivantes:

a) le piston (22) se déplace dans le cylindre (20) en principe verticalement;

b) une valve (38) de réglage de la hauteur du siège est montée dans le conduit (30) entre le cylindre (20) et l'accumulateur de pression (28);

c) un organe de manœuvre (40) destiné au dispositif de réglage de la hauteur du siège est relié à la valve (38) de réglage de la hauteur du siège;

d) un raccord (42) destiné au liquide sous pression est relié par une valve de régulation de pression (36) à la valve (38) de réglage de la hauteur du siège;

e) le régulateur de débit réglable à la main; formant de dispositif d'amortissement nominal (32), et le régulateur de débit formant le dispositif de réglage d'amortissement (34) sont montés dans le conduit (30) entre l'accumulateur de pression (28) et le raccordement (46) de la valve (38) de réglage de la hauteur du siège avec ce conduit (30).

FIG. 1

FIG. 2

FIG.3

zu 28 ← ← von 20

FIG.4A          FIG.4B